Europäisches Patentamt

European Patent Office

Office européen des brevets

(11) Publication number: **0 051 093**
**A1**

## EUROPEAN PATENT APPLICATION

(21) Application number: 80303897.5

(22) Date of filing: 31.10.80

(51) Int. Cl.³: **B 62 D 35/00**

(43) Date of publication of application:
12.05.82 Bulletin 82/19

(84) Designated Contracting States:
AT BE CH DE FR GB IT LI LU NL SE

(71) Applicant: PREMIX, INC.
P.O. Box 886
Ashtabula Ohio 44004(US)

(72) Inventor: McErlane, John C.
2281 Brick Drive
Green Bay Wisconsin 54303(US)

(74) Representative: Lambert, Hugh Richmond et al,
D. Young & Co. 10 Staple Inn
London WC1V 7RD(GB)

(54) A vehicle or vehicle trailer comprising means for reducing negative pressure behind the moving vehicle.

(57) A vehicle or vehicle trailer is provided with means for reducing negative pressure behind the moving vehicle comprising a downwardly and rearwardly inclined deflector panel (25) mounted below the vehicle body (10) immediately in front of the rear wheels (16) and which when the vehicle is in forward motion deflects air downwardly and rearwardly between the rear wheels into the region of reduced pressure.

EP 0 051 093 A1

Croydon Printing Company Ltd.

A Vehicle or Vehicle Trailer Comprising Means for Reducing Negative
Pressure Behind the Moving Vehicle
~~Title:~~ ~~"Undermounted Air Deflector for Trucks and Trailers"~~

~~BACKGROUND OF THE INVENTION~~

This invention relates to apparatus for reducing the negative air pressure that normally exists behind a moving vehicle such as a truck or tractor-drawn trailer.

It is well-known that a moving vehicle develops a positive air pressure on surfaces which are presented in the direction of travel and negative or subatmospheric pressure (hereinafter called vacuum sometimes for the sake of brevity) simultaneously on the rear side of such surfaces. Thus, considering a rapidly moving vehicle as a whole, negative pressure normally exists behind its rear so there is a pressure differential or force that tends to subtract from the force and energy provided by the engine for driving the vehicle forward. The fact that significant amounts of snow are drawn into the ambient around the rear of a truck and plastered on its rear surface is some manifestation of the existence of these differential pressure conditions. Of course, the forces required to compensate or equalize the pressure differentials must be derived from the engine at the expense of increased fuel consumption.

Improving the aerodynamic properties of vehicles, particularly commercial vehicles, which travel great distances, is a widely recognized requirement. Many proposals have been made for fulfilling this requirement. Some give attention to reducing air resistance of the tractor or truck cabin and to the body of the vehicle and others position airfoils or deflectors at supposedly strategic locations in an effort to reduce negative pressure or air turbulence at some places near the front of the vehicles such as around the top and rear of the cabin.

By way of example, U.S. Patent No. 3,929,202 to Hobbensiefken basically teaches sloping the front upper part of a truck or tractor cabin rearwardly and placing angulated airfoils or deflectors in the front end region of the vehicle including a deflector forwardly of the frontmost wheels above road level to reduce turbulence and possibly vacuum conditions near the front end of the vehicle, but it is not evident that the problem of reducing vacuum at the rear of the vehicle as a whole is specifically addressed.

U.S. Patent No. 4,119,339 to Heimburger illustrates a deflector mounted forward of the front wheels and of the engine for diverting air flow downwardly and sideways when the vehicle is in motion. A mechanism is provided for enabling the deflector to be pivoted upwardly to a more nearly horizontal position to get it out of the way when there is a prospect for driving over very rough terrain which could result in deflector destruction. The deflector is not located where it could have significant effect on reducing vacuum at the rear of the vehicle nor does it seem that the problem is recognized.

U.S. Patent No. 3,348,873 to Saunders teaches locating airfoils or deflectors in the front end region of a tractor and van type trailer combination mainly in the region defined by the rear of the tractor cabin and the front of the van body. One deflector is ahead of the rear wheels of the tractor but there is no suggestion for locating a deflector where it might be most effective to reduce vacuum or negative pressure which is prevalent in the rearmost region of the vehicle and which has the greatest effect on increasing the engine load.

SUMMARY OF THE INVENTION

The invention described herein focuses on reducing the negative pressure or vacuum in the region of a vehicle where differential pressure has the greatest net vehicle retarding effect, that is, at the rear of the vehicle. In accordance with the invention, an airfoil or what may be more aptly called a deflector panel is located under the vehicle body on the forward side or ahead of the rearmost set of wheels. The deflector is preferably formed with a front or attack surface which has a compound curvature, that is, it is curved bilaterally or convexly. The deflector panel is angulated for deflecting air, when the vehicle is moving forward, with downward and rearward components of motion so that most of the air which is impinged by the deflector is directed between the rear wheels to alleviate vacuum which would otherwise exist at the rear of the vehicle body. The deflector curvature is such that air which deflects sideways or laterally also has a rearward component of motion which aids in reducing the vacuum. Comparative tests run with the deflector installed and without it have shown that a substantial reduction in fuel consumption can be achieved when it is present and that snow accumulation on the rearmost surfaces of the vehicle is less with the deflector installed than without it. Reducing the amount of snow that is projected and swirled at the back of the vehicle is a safety benefit to motorists following a truck or trailer.

~~A fundamental object of the invention is to provide an air stream~~ to the ambient region immediately behind a moving vehicle to reduce the negative vehicle retarding pressure which would otherwise exist and, hence, reduce fuel consumption by the engine that is being used to propel the vehicle.

A further object is to provide a deflector for properly directing air flow from a region ahead of the rearmost set of vehicle wheels to the ~~rear of these wheels and to the region aft of the vehicle body.~~

~~How the foregoing and other more specific objects of~~ The invention ~~are achieved with~~ will be ~~evident~~ further described in the more detailed description of a preferred embodiment of the invention which will now be set forth ~~in~~ with reference to the drawing.

~~DESCRIPTION OF THE DRAWING~~

Fig. 1 is a side elevation of a vehicle, particularly, a trailer van on which the new air flow control deflector is installed immediately forward of the rearmost set of wheels, the tractor for pulling the trailer being omitted;

Fig. 2 is a vertical section, on a line corresponding with 2-2 in Fig. 1, showing a frontal view of the undermounted deflector;

Fig. 3 is a view of the deflector and its mounting means from a side and rear perspective;

Fig. 4 is a transverse section of the deflector taken along a line corresponding with 4-4 in Fig. 3;

Fig. 5 is a partial longitudinal section taken in the leading edge region of the deflector and showing the front end mounting brackets; and

Fig. 6 is a partial plan view of the deflector looking toward the irregular line 6-6 in Fig. 5.

~~DESCRIPTION OF A PREFERRED EMBODIMENT~~

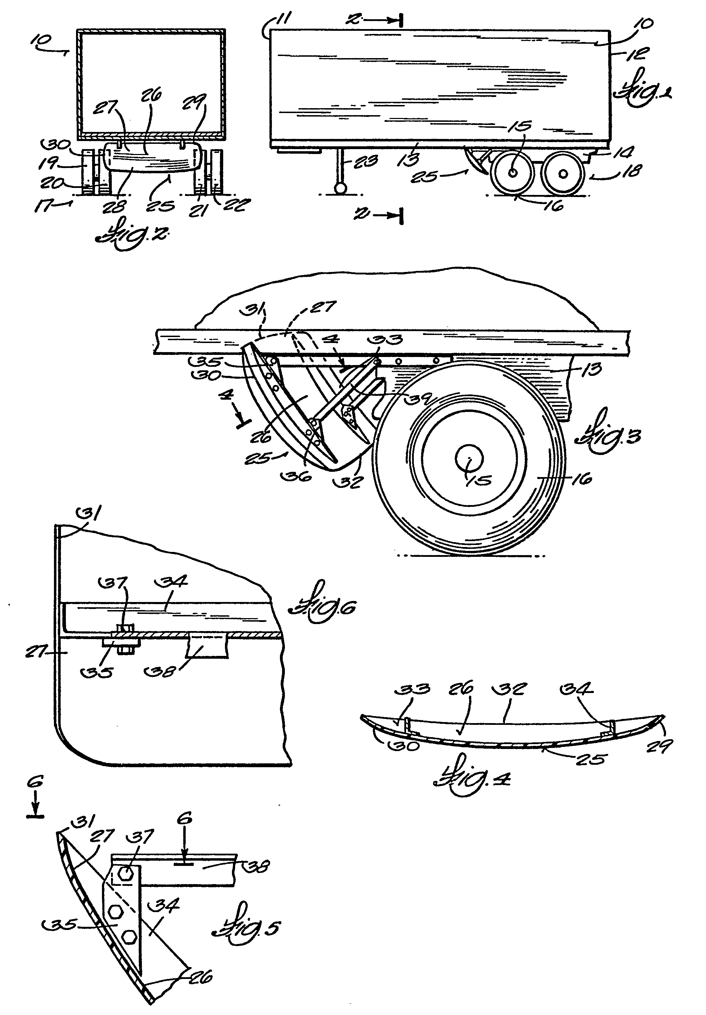

The vehicle used for illustrating an application of the new airfoil or deflector is a trailer van as shown in Figs. 1 and 2. The van comprises a load carrying body 10 having a front wall 11 and a rearmost wall 12 which, as in the illustration, is usually flat and vertical and usually has doors which are not shown. In any event, the rear wall is usually devoid of good aerodynamic characteristics such that negative or subatmospheric pressure develops in the ambient region aft of the body and, particularly, aft of rear wall 12 when the vehicle is being propelled forwardly at high speed which is to the left in respect to the Fig. 1 orientation of the vehicle.

In Fig. 1, vehicle body 10 is mounted on a chassis or main frame 13 on which the floor of the body rests and there is a subframe 14 mounted to frame 13. Subframe 14 has the wheel axles, such as the axle 15 which is coincident with the center of tire 16, and the axle suspension system, not visible, is mounted to the subframe in accordance with conventional practice which requires no elaboration. The illustrated vehicle is a so-called double axle type to accommodate two sets of wheels in tandem such as the sets marked 17 and 18 in Fig. 1. As can be seen in Fig. 2, a typical set is composed of four coaxial wheels 19-22. In Fig. 1 the van is shown resting on a swivel frame 23 since the vehicle is presently parked.

The new deflector is designated generally by the reference numeral 25 in Figs. 1, 2 and 3. Fig. 1 shows the deflector to be angulated and mounted to subframe 14 ahead of or on the forward side of the rearmost sets of vehicle wheels which is true for the illustrative van and for any truck or vehicle to which the deflector is applied.

The front or forward surface of the deflector panel 25 has compound convexity, that is, it is generally curved in the longitudinal or forward direction and sidewise or in the lateral direction. Referring to Fig. 2, the principal central area 26 of deflector 25 has a relatively long radius of curvature and has longitudinally separated leading and trailing marginal areas 27 and 28, and its laterally separated side margin areas 29 and 30 have slightly smaller radiuses of curvature or are more sharply curved than central area 26 in this preferred embodiment. The lateral section of deflector 25 in Fig. 4 shows more clearly how the longer radius of curvature in central area 26 compares with the lesser radius in the lateral or side margin areas 29 and 30. Similarly, the partial longitudinal section of the deflector depicted in Fig. 5 shows how the leading margin area 27 is curved more than central area 26. As can be seen in Fig. 3, the most forward or leading edge 31 of the deflector is straight across whereas the aft most or trailing edge 32 is curved crosswise. The leading edge is preferably made straight to enable positioning the deflector so the smallest gap will exist between the underside of the vehicle floor to minimize the amount of horizontally traveling air which might leak past the deflector when the vehicle is in motion. The object is to direct as much air as possible downwardly and rearwardly for the airstream to pass between the innermost vehicle wheels to the region behind the rear of the vehicle. Deflector panel 25 is angulated in a longitudinal direction and is preferably mounted at an angle of substantially 45° with respect to vertical for directing a major part of the impacted air most advantageously rearwardly between the innermost pair of wheels, and, inevitably, a minor part of the air along the outside of the wheels to neutralize the negative pressure aft of the rear 12 of the vehicle. The angle may have to be varied to accommodate conditions and interferences to mounting in some cases. The deflector will maintain substantial air directing efficacy as long as an angle in the range of 33° to 57° with respect to vertical is obtained. The measured angle in this example would be between a vertical line and a chordal line, said chordal line being one that runs centrally of the deflector panel 25 from leading edge 31 through the shortest distance to trailing edge 32. Generally, the deflector should be mounted in any vehicle as close as conditions permit to the periphery of the vehicle tires. As a practical matter, a minimum clearance of about six to eight inches (15 to 20 cms) between the deflector and the most forward tires on the rear set of wheels is recommended. The trailing or lower edge 32 of deflector panel 25 should preferably be at a level at least a small amount below the center of the tire but should be high enough to meet accepted road clearance standards. The width or lateral dimension of the deflector panel 25 desirably should be great enough for its side edges to reach the center of the outermost tires.

Deflector panel 25 may be mounted under the floor of the vehicle in various ways but the mode which is deemed to be the best and which is illustrated involves mounting in a manner which involves flexibility in setting the rearward and forward position of the deflector as well as its angular attitude. The preferred way of deflector mounting uses two angle members 33 and 34 which have right angular cross sections as can be seen in Figs. 3 and 4. Members 33 and 34 extend generally longitudinally and substantially from leading edge 31 to trailing edge 32 of the deflector panel as can be seen in Fig. 3. Members 33 and 34 may be interfaced with and fastened to the deflector panel by any suitable fastening means, not shown. Since the deflector itself is preferably molded of reinforced plastic material, the angle members can be molded integrally to it if desired or the members may have any configuration or be made of any material which provides a flange for connecting a mounting bracket.

Fig. 3 shows that members 33 and 34 have brackets, such as those indicated by the numerals 35 and 36, fastened to them. The leading end brackets such as those marked 35, as can be seen in Figs. 5 and 6, are fastened by means of bolts 37 to a longitudinally extending member 38 which is mounted to the vehicle body and has a mate, not visible, in parallelism with it. Thus, until bolt 37 is tightened, and until the rest of the mounting means is secured, the deflector panel can be pivoted on bolt 37 to permit the angulation of the deflector panel to be established.

The rear end of the deflector panel is supported on struts 39 which connect to bracket plates 36 at one end and to members 38 at the other end.

The mounting means provides for adjusting the deflector to various angles to compensate for truck and trailer differences such as tire radius, floor height, sliding suspensions and so forth. As indicated earlier, in any case the deflector panel should be mounted with its top or leading edge as close as possible to the underside of the vehicle and should extend downwardly as far as possible within practical limits to allow for clearance of obstacles on the roadway. It has been found that providing the mounting hardware for four different deflector angulations is enough to cover the large majority of vehicles, especially commercial vehicles such as trucks and trailers which come close to being standardized insofar as the components which have a bearing on the location of the deflector panel is concerned.

It would be unprofitable to attempt to discuss in detail the exact paths along which the deflector directs the air to the negative pressure region of the moving vehicle. It is sufficient to point out that a deflector constructed and mounted as described forward of the rearmost set of vehicle wheels results in a substantial reduction in the power required to propel the vehicle at higher speeds. Moreover, use of the invention lowers torque requirements in the vehicle drive train and lowers stress on the engine and other parts so that vehicle life is prolonged.

Although a preferred embodiment of deflector panel assembly has been described in detail, such description is to be considered illustrative rather than limiting, for the basic concepts of the invention can be variously implemented and are to be limited only by interpretation of the claims which follow.

Claims

1. A vehicle or vehicle trailer comprising a vehicle or trailer body having at least one set of road wheels comprising at least two wheels positioned on opposite sides of the body towards the back end thereof and means mounted on said body for reducing the vacuum created behind the vehicle or vehicle trailer during forward motion thereof, characterised in that said means comprise a downwardly and rearwardly inclined deflector panel (25) mounted below said body (10) in front of said set of road wheels (16), said deflector plate extending transversely of the vehicle body and being angled with respect to the vertical so as to deflect air downwardly and rearwardly between said wheels and into the region of said vacuum when the vehicle or vehicle trailer is in forward motion.

2. A vehicle or vehicle trailer according to claim 1, characterised in that front surface of the deflector panel (25) has a compound curvature.

3. A vehicle or vehicle trailer according to claim 2, characterised in that the front surface of the deflector panel is forwardly convex and continuously curved and comprises a major central area (26) having a large radius of curvature and spaced apart upper, leading and lower, trailing margin areas (27, 28) and laterally spaced side margin areas (29, 30) having a lesser radius of curvature.

4. A vehicle or vehicle trailer according to claim 1, 2 or 3, characterised in that the deflector panel (25) is angularly adjustable over an angular range of from 33° to 57° relative to vertical.

5. A vehicle or vehicle trailer according to claim 4, characterised in that the underside of the body (10) is provided with a pair of longitudinally extending brackets (38) spaced from one another transversely of the vehicle body, and in that the deflector panel (25) is mounted on said brackets (38) by a pair of first links (35) pivotally connected to brackets (38) at the forward end thereof and by a pair of struts (39) pivotally connected to the panel (25) adjacent its trailing edge (32) and detachably connectable to said brackets (38) at a variety of different longitudinal positions, thereby to vary the angle of the panel relative to the vertical.

6. A vehicle or vehicle trailer according to any one of claims 1 to 5, characterised in that the upper, leading edge (31) of the panel (25) is straight and positioned close to the underside of the vehicle or vehicle trailer body (10).

7. A vehicle or vehicle trailer according to any one of claims 1 to 6, characterised in that the lower, trailing edge (32) of the deflector panel (25) is located below the mid-plane of the road wheels (16) at the rear of the vehicle or vehicle trailer body.

Fig.1

Fig.2

Fig.3

Fig.4

Fig.5

Fig.6

0051093

1 / 1

**0051093**

European Patent Office

**EUROPEAN SEARCH REPORT**

Application number

EP 80 30 3897

## DOCUMENTS CONSIDERED TO BE RELEVANT

| Category | Citation of document with indication, where appropriate, of relevant passages | Relevant to claim |
|---|---|---|
| | US - A - 4 119 339 (HEIMBURGER)<br>* Whole document *<br><br>-- | 1,4,6,7 |
| | GB - A - 2 051 691 (CADBURY SCHWEP-PES)<br>* Whole document *<br><br>-- | 1,4,6,7 |
| | DE - A - 2 827 834 (M.A.N.)<br>* In particular figure 1 *<br><br>-- | 1,4,6,7 |
| A | FR - A - 2 163 799 (TREMBLAY)<br><br>---- | 1 |

**CLASSIFICATION OF THE APPLICATION (Int. Cl³)**

B 62 D 35/00

**TECHNICAL FIELDS SEARCHED (Int. Cl.³)**

B 62 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| The present search report has been drawn up for all claims | |

| Place of search | Date of completion of the search | Examiner |
|---|---|---|
| The Hague | 09-04-1981 | SCHMAL |

EPO Form 1503.1  06.78